# EUROPÄISCHE PATENTSCHRIFT

(11) **EP 1 488 027 B1**
(45) Veröffentlichungstag und Bekanntmachung des Hinweises auf die Patenterteilung: **02.11.2006**
(21) Anmeldenummer: 03709765.6
(22) Anmeldetag: 10.03.2003
(51) Int. Cl.: D01F 2/00, D01D 5/06, D01D 5/088, F24F 13/00

(54) **VERFAHREN UND VORRICHTUNG ZUR REGELUNG DES RAUMKLIMAS BEI EINEM SPINNPROZESS**
METHOD AND DEVICE FOR REGULATING THE ATMOSPHERIC CONDITIONS DURING A SPINNING PROCESS
PROCEDE ET DISPOSITIF POUR REGULER LES CONDITIONS ATMOSPHERIQUES QUI REGNENT DANS UNE PIECE AU COURS D'UN PROCESSUS DE FILAGE

(30) Priorität: 22.03.2002 DE 10213007
(43) Veröffentlichungstag der Anmeldung: 22.12.2004
(73) Patentinhaber: Zimmer Aktiengesellschaft, 60388 Frankfurt am Main (DE)
(72) Erfinder: ZIKELI, Stefan, A-4844 Regau (AT); ECKER, Friedrich, A-4850 Timelkam (AT)
(74) Vertreter: Grünecker, Kinkeldey, Stockmair & Schwanhäusser Anwaltssozietät
(86) Internationale Anmeldenummer: PCT/EP2003/002426
(87) Internationale Veröffentlichungsnummer: WO 2003/080906

(56) Entgegenhaltungen:
- DE-A- 2 014 828
- DE-A- 4 309 416
- DE-A- 10 200 405

## Beschreibung

Die Erfindung betrifft ein Verfahren und eine Vorrichtung zur Regelung des Raumklimas bei einem Spinnprozess, der in einem gegenüber dem Raum offenen Spinnbereich durchgeführt wird und bei dem im Spinnbereich aus einer Spinnmasse enthaltend Wasser, Cellulose und tertiäres Aminoxid Endlosformkörper extrudiert und die extrudierten Endlosformkörper vor dem Eintauchen in ein Fällbad in einem Luftstrom mit einem Gasstoffstrom beblasen werden, und die Spinnanlage in einem an den Spinnbereich angrenzenden Aufenthaltsbereich durch Bedienpersonal inspiziert und gewartet werden kann.

Endlosformkörper aus einer Spinnmasse enthaltend Wasser, Cellulose und tertiäres Aminoxid werden im Wesentlichen in den drei Arbeitsschritten Extrudieren, Verstrecken und Ausfällen hergestellt. Als tertiäres Aminoxid wird N-Methylmorpholin-N-oxid (NMMNO) verwendet.

Zur Extrusion wird die aufgeheizte Spinnmasse durch Extrusionsöffnungen der Spinnanlage geleitet und dabei zu Endlosformkörpern extrudiert. Direkt an die Extrusionsöffnungen bzw. Extrusions- oder Spinndüsen schließt sich ein Luftspalt an, in dem eine Zugkraft auf die Endlosformkörper aufgebracht wird und diese verstreckt. Über die Zugkraft wird die Dicke der Endlosformkörper, beispielsweise bei Textilfasern der Fasertiter, eingestellt. Außerdem orientieren sich unter dem Einfluss der Zugkraft die Moleküle in den Endlosformkörpern und erhöhen so deren mechanische Festigkeit. Anschließend tauchen die Endlosformkörper in ein Fällbad, indem das noch in den Endlosformkörpern enthaltene Lösungsmittel ausgefällt wird. In der industriellen Praxis findet der Spinnprozess in einem im wesentlichen abgeschlossenen Raum, meist einer Halle, einem Spinnsaal oder ähnlichem statt.

Bei der Herstellung von Endlosformkörpern aus einer Spinnmasse enthaltend Cellulose, Wasser und tertiäres Aminoxid ist zum einen problematisch, dass die Oberflächenklebrigkeit der Endlosformkörper unmittelbar nach der Extrusion sehr hoch ist. Zum anderen müssen, damit der Faserherstellungsprozess wirtschaftlich gestaltet werden kann, Extrusionsdüsen mit einer hohen Spinndichte, d.h. einer hohen Anzahl von Extrusionsöffnungen pro Flächeneinheit verwendet werden. Dies führt zwingend zu einer geringen Beabstandung der einzelnen Extrusionsöffnungen und der extrudierten Endlosformkörper im Luftspalt und damit zu einer negativen Beeinflussung des Wärmehaushaltes im Bereich der Extrusions- und Verzugszone. Durch die so entstehenden hohen Temperaturen kann die Spinn- bzw. Verzugsviskosität der extrudierten Endlosformkörper derart sinken, dass es zu Fadenrissen kommt.

Um die Oberflächenklebrigkeit und die Temperatur der Endlosformkörper im Luftspalt abzusenken, sind im Stand der Technik einige Lösungen vorgeschlagen worden.

So ist in der US 4,246,221 die Herstellung von cellulosischen Fasern und Filamenten beschrieben, die im Luftspalt nach der Extrusion mit einem Nichtlösungsmittel, wie z. B. Wasser besprüht werden, um die Klebrigkeit der Filamentoberflächen zu verringern.

Da die Besprühung mit einem Nichtlösungsmittel relativ aufwändig ist, hat sich im Stand der Technik die Beblasung der Endlosformkörper im Luftspalt mit Luft oder einem Gasgemisch durchgesetzt.

In der WO 93/19230 wurde erstmalig beschrieben, dass zur Herstellung von Cellulosefasern nach dem NMMNO Verfahren die aus der Düse austretenden Filamente unmittelbar nach dem Austreten mit Luft bzw. einem gasförmigen Medium gekühlt werden können, um eine hohe Produktivität zu erzielen.

Gemäß der Lehre der WO 96/21758 kann die Spinnbarkeit verbessert und die Fibrillierungsneigung verringert werden, wenn die Feuchte der Luft in zwei Bereichen des Luftspaltes unterschiedlich hoch eingestellt wird.

Bei den beiden Vorrichtungen der WO 95/01470 und der WO 95/01473 wird zur Faserherstellung eine ringförmige Spinndüse verwendet, um den Kühlgasstrom gleichmäßig laminar den Filamentbündeln zuführen zu können.

In der WO 96/17118 ist ein Verfahren dargestellt, bei dem zur Kühlung der frisch gesponnenen Filamente konditionierte Luft verwendet wird. D.h. es kann Luft eingeblasen werden mit bis zu 85% relativer Luftfeuchtigkeit. Weiterführend wird in DE 19717257 A1 angegeben dass Luft zur Anblasung zwischen 14 und 25°C verwendet wird.

In der WO 96/07777 ist ein Verfahren zur Herstellung von cellulosischen Fasern beschrieben, bei dem zur Herstellung von fibrillierungsreduzierten Fasern aliphatische Alkohole wie Methanol, Ethanol, Propanol und Butanol in gasförmigem Zustand zur Beblasung der extrudierten Filamente eingebracht werden.

Gemeinsam ist all den in diesen Druckschriften beschriebenen Vorrichtungen und Verfahren eine Beblasung mit sehr geringer Geschwindigkeit, so dass der Beblasungsstrom im Wesentlichen laminar ist. Durch die laminare Strömung soll eine zu starke mechanische Belastung der Endlosformkörper durch den Luftstrom vermieden werden. Bei den in der WO 94/28218 und der WO 98/18983 beschriebenen Vorrichtungen wird zur Stabilisierung der Richtung der Beblasung der Luftstrahl durch eine Saugdüse im Luftspalt auf der gegenüberliegenden Seite abgesaugt.

Da die Kühlwirkungen dieser herkömmlichen Arten von Beblasungen innerhalb des Luftspaltes aufgrund der niedrigen Beblasungsgeschwindigkeiten für hohe Produktionsraten von Endlosformkörpern bei gleichzeitiger Qualitätssteigerung nicht ausreichen, ist gemäß der Lehre der vom Anmelder eingereichten DE 102 00 406 ein turbulenter Gasstoffstrom im Luftspalt auf die Endlosformkörper gerichtet. Ein solcher turbulenter Kühlgasstrom bewirkt eine effizientere Kühlung und im Bereich der Endlosformkörper eine bessere Durchmischung und einen besseren Wärmeausgleich. Durch die in der DE 102 00 406 beschriebene Art der Luftzuführung vorzugsweise nicht unmittelbar nach dem Austritt der Filamente aus der Düse und nicht unmittelbar vor Eintritt in das Spinnbad wird der Spinnprozess stabilisiert. Dadurch kann bei gleichzeitig hoher Lochdichten einerseits eine ausreichende Verzugsspannung während der Extrusion angelegt werden; andererseits verkleben die Endlosformkörper dazu neigen im Luftspalt nicht mehr sofort bei gegenseitiger Berührung, was ansonsten leicht zu Abrissen einzelner Endlosformkörper oder zu Dickstellen in den fertigen Endlosformkörpern führen könnte. Bei Abrissen muss der Extrusionsprozess angehalten und neu gestartet werden; Dickstellen führen zu einer verminderten Faserqualität und zu einem erhöhten Ausschuss.

Allerdings werden aufgrund der starken turbulenten Durchmischung bei einem solchen turbulenten Kühlgasstrom vermehrt Lösungsstoffe und Abbauprodukte aus dem Spinnprozess vom Kühlgasstrom erfasst und in die Umgebung der Spinnanlage transportiert.

Aufgrund der hohen Geschwindigkeiten des Kühlgasstromes ist eine Absaugung, wie beispielsweise bei der WO 94/28218 oder der WO 98/18983, in unmittelbarer Nähe der Endlosformkörper nicht mehr möglich, da ansonsten eine starke Saugwirkung auf die Endlosformkörper ausgeübt werden würde. Außerdem beeinflusst der turbulente Kühlgasstrom das Raumklima des Raumes, in dem der Spinnprozess stattfindet, da er aufgrund seiner hohen Geschwindigkeit leichter durch die Endlosformkörper bis tief in den Spinnbereich oder Aufenthaltsbereich eindringt.

Grundsätzlich ist bei den obigen Verfahren und Vorrichtungen mit Beblasung durch einen Gasstoffstrom problematisch, dass die vom Gasstoffstrom transportierten Abbauprodukte in der Umgebung der Anlage das Raumklima belasten und somit zu ungünstigen Arbeitsbedingungen für Bedienpersonal führen.

Im Stand der Technik ist es bei der Herstellung von Rayonfasern, beispielsweise aus der US 3,924,984 und der US 4,477,951, bekannt, den Spinnbereich hermetisch abzudichten und die Abbauprodukte, die beim Spinnverfahren in die Umgebungsluft abgesetzt werden können, innerhalb der Abdichtung abzusaugen. Aus den hermetisch abgedichteten Spinnbereichen werden die entstehenden Nebenprodukte wie Schwefelkohlenstoff und Schwefelwasserstoff abgesaugt, da diese Gase gesundheitsschädlich sind und nicht in die Arbeitsumgebung gelangen dürfen. Weiterhin ist aus diesen Druckschriften bekannt, dass die Spinnstellen mit Dampf beaufschlagt werden, um die Spinnumgebungstemperatur und Feuchte einzustellen, da die raumklimatischen Bedingungen für die Faserqualität von großer Bedeutung ist.

Nachteilig bei solchen abgeschotteten oder versiegelten Spinnbereichen sind allerdings die sehr ungünstigen Bedienungseigenschaften einer solchen Anlage: Im Falle von Wartungs- und Inspektionsarbeiten ist eine hermetische Abdichtung des Spinnbereichs unter einer Art Schutzglocke problematisch, da Fehler im Spinnprozess vom Bedienpersonal, das die Spinnanlage und den Spinnprozess von einem im Aufenthaltsbereich angeordneten Inspektionsbereich aus inspiziert, durch die Schutzglocke hindurch nicht oder nur sehr schwer zu erkennen sind. Außerdem muss im Falle von Wartungsarbeiten im Spinnbereich zunächst die hermetische Abdeckung umständlich entfernt werden. Negativ wirkt sich auch das Anbringen einer Schutzglocke für den Düsenwechsel aus.

Eine Lösung, um die Wartung und Inspektion einer Spinnanlage zu erleichtern, ist in der DE 102 04 381 des Anmelders beschrieben. Die Spinnanlage der DE 102 04 381 weist Spinnmittel auf, die von einem Inspektionsbereich, der Teil eines Aufenthaltsbereichs für Bedienpersonal ist, frei einsehbar und gleichzeitig für Bedienpersonal in einem zwischen dem Inspektionsbereich und der Spinnanlage liegenden Wartungsbereich, der ebenfalls Teil des Aufenthaltsbereiches ist, aus im wesentlichen einer einzigen Körperhaltung heraus zugänglich sind.

Um folglich einerseits eine effiziente Beblasung, die die Qualität der ersponnenen Endlosformkörper steigert, und andererseits eine leichte Inspizierbarkeit sowie Wartbarkeit der Spinnanlage zu erhalten, ist es demnach notwendig, den Spinnbereich gegenüber dem Raum, in dem der Spinnbereich angeordnet ist bzw. der Spinnprozess stattfindet, offen zu halten.

In diesem Fall besteht bei hohen Volumenströmen der Beblasung im Luftspalt, wie sie üblicherweise zur Verspinnung von Cellulosefasern benötigt werden, das Problem, dass sich das Raumklima sowohl im Spinnbereich als auch im Aufenthaltsbereich für Bedienpersonal verschlechtert. Im Spinnbereich kann eine Verschlechterung des Raumklimas, insbesondere eine Erhöhung der Feuchte und der Temperatur, zur Aufrechterhaltung einer gleichbleibenden Spinnqualität eine verstärkte Beblasung notwendig machen, was zum einen zu einer weiteren Verschlechterung des Raumklimas im Wartungsbereich und zum anderen einer erhöhten mechanischen Belastung des Endlosformkörpers bis hin zu Fadenrissen führt.

Der Erfindung liegt daher die Aufgabe zugrunde, ein Verfahren und eine Vorrichtung bereitzustellen, die die Verwendung einer leistungsstarken Beblasung bei gleichzeitiger ergonomischer Ausgestaltung der Spinnanlage und die Einstellung der arbeitstechnisch notwendigen raumklimatischen Bedingungen ermöglichen.

Erfindungsgemäß wird diese Aufgabe für das eingangs genannte Verfahren dadurch gelöst, dass die Abluft aus dem und die Zuluft in den Raum unter Berücksichtigung des Gasstoffstromes so gesteuert werden, dass im Spinnbereich und/oder Wartungsbereich ein vorbestimmtes Raumklima eingestellt wird.

Diese Lösung ist einfach und unterscheidet sich von herkömmlichen Klimaanlagen dadurch, dass zur Einstellung des Raumklimas explizit der Gasstoffstrom als Bilanzgröße zur Regelung des Raumklimas berücksichtigt wird.

Im folgenden wird als Prozessluft die von den beim Spinnprozess anfallenden Bestandteilen belastete Luft bezeichnet, die die Dämpfe aus der heißen Spinnmasse und aus dem Fällbad, den Gasstoffstrom und aufgeheizte Luft aus der Umgebung des Luftspaltes umfasst.

Im Stand der Technik scheint eine gesamtheitliche Bilanzierung der Luftführung innerhalb des Raums, in dem der Spinnprozess stattfindet, sowie eine Einstellung der prozess- und raumklimatischen Einstellungen auch in Bezug auf die erforderlichen arbeitstechnischen Gegebenheiten nicht bekannt zu sein.

Die erfindungsgemäße Lösung ermöglich demnach einen Kompromiss zwischen den für eine gute Faserqualität notwendigen klimatischen Bedingungen im Spinnbereich und den raumklimatischen Anforderungen für das Bedienpersonal gefunden werden. Für die Verarbeitung der Fasern müssen bestimmte Luftzustände geschaffen und über einen längeren Zeitraum konstant gehalten werden. Darüber hinaus ist auch darauf zu achten, dass zur Erzielung erträglicher klimatischer Verhältnisse am Arbeitsplatz die prozesstechnischen notwendigen Luftverhältnisse nicht verschlechtert werden, was wiederum zu einer schlechten Produktqualität wie Verklebungen, Fadenrissen, Ungleichmäßigkeiten bei Dicke und Festigkeiten der Fasern und Faserkabeln in Form von Filamenten und Stapelfasern führt.

Der weltweite Einsatz von Spinnlagen zur Verarbeitung aus Lösungen von Cellulose in wässrigem tertiärem Aminoxid und die sich daraus ergebenden, je nach Standort unterschiedlichen klimatischen Bedingungen sind bei der Konzeption von Spinnanlagen nach dem Aminoxidverfahren zu berücksichtigen. In unten beschriebenen Versuchen wurden Raumluftbedingungen mit Zu- und Abluftströmen simuliert und der Spinnprozess beobachtet bzw. die aus dem Spinnprozess abgeführte Luftmenge analysiert.

Durch die Einstellung eines vorbestimmten Raumklimas im Spinnbereich und/oder Wartungsbereich lässt sich das Raumklima trotz des Gasstoffstromes aus dem Spinnbereich für die Führung des Verfahrens und für das Wohlbefinden vom Bedienungspersonal optimal steuern und die Abluft einer Nachbehandlungsanlage zuzuführen.

Eine weitere Möglichkeit zur Abführung von Luftströmen aus der Spinnmaschine und dem Spinnraum zur Einstellung der Raumkonditionen zu einer Abluftbehandlungsanlage ist notwendig bei z. B. spontan verlaufenden exothermen Reaktionen des Gemisches aus Cellulose und wässrigem tertiärem Aminoxid, damit die Umgebungsluft nicht von Abbauprodukten kontaminiert wird.

Mit der erfindungsgemäßen Lösung ist es schließlich auch möglich, der Spinnmasse viskositätsverändernde, leicht siedende Flüssigkeiten zuzugeben, die während der Extrusion, insbesondere bei Extrusions- und Verabreitungstemperaturen von ca. 100 °C und darüber, spontan verdampfen. Ohne die erfindungsgemäße Steuerung des Raumklimas im Spinnsaal würden diese Dämpfe in die der Spinnanlage unmittelbar angrenzenden Umgebung oder in den Arbeitsbereich - beispielsweise in Form eines mit Wasser, Wasserdampf oder mit einem Celluloselösungsmittel und dessen Abbauprodukte angereicherten Lösungsmitteldampfes - austreten und dort das Arbeitsklima negativ beeinflussen.

Insbesondere kann das Raumklima bezüglich bestimmter Zustandsgrößen auf vorbestimmte Werte bzw. Sollwerte eingestellt werden, wobei diese Zustandsgrößen vorzugsweise Zustandsgrößen sind, die durch den Spinnprozess am meisten beeinflusst werden. Derartige Zustandsgrößen sind beispielsweise der Gehalt an tertiärem Aminoxid und/oder an anderen Abbauprodukten des Spinnprozesses in der Raumluft, die vom Gasstoffstrom aus den Endlosformkörper gelöst werden, oder die Feuchte oder Temperatur der Raumluft. Diese Zustandsgrößen können jeweils einzeln oder in beliebiger Kombination miteinander als Regelungsgrößen für die Steuerung des Raumklimas verwendet werden.

Dabei sind die verfahrenstechnischen Größen wie die Abluftmenge in m³/h, die Zuluftmenge in m³/h, die Ablufttemperatur in °C, die Zulufttemperatur in °C, die relative Luftfeuchtigkeit bzw. die Feuchtigkeit der Luft in (kg Wasser)/(kg trockene Luft) einzustellen und zu messen, sowie in Bezug mit den Betriebsparametern der Spinnmaschine zu setzen. Zusätzliche Messungen der Luftzusammensetzung in der Abluft wie z. B. Gehalt an Aminen, anderen organischen Lösungsmitteln und Wasser können auch erfolgen, um eine eventuell angeschlossene Luftnachbehandlungsanlage in Abhängigkeit des Prozesses so zu steuern, dass einerseits gute Spinn- und Raumbedingungen, sowie ein hoher Rückgewinnungs- und Abscheidegrad an Luftinhaltsstoffen erreicht wird.

Dazu können in einer vorteilhaften Ausgestaltung im Spinnbereich und/oder Wartungsbereich ein oder mehrere Sensoren vorgesehen sein, die den tatsächlichen Wert an einer derartigen, das Raumklima repräsentierenden Zustandsgröße erfassen und an einen Regler weiterleiten. Im Regler kann dann der tatsächliche Wert mit einem vorgebbaren Sollwert verglichen werden und das Raumklima entsprechend der Abweichung der tatsächlich gemessenen Zustandsgröße vom Sollwert nachgeführt werden. Eine solche Nachführung des Raumklimas kann beispielsweise durch eine Steuerung des Volumenstroms der Abluft eingestellt werden. Alternativ oder zusätzlich zu einer Volumenstromsteuerung der Abluft kann auch der Volumenstrom der in den Raum zugeführten Zuluft nachgeführt werden. Außerdem kann die Temperatur und/oder die Feuchte der Zuluft entsprechend der Abweichung das Raumklima vom Sollwert durch Heizeinrichtungen und/oder Befeuchtungseinrichtungen verändert werden. Wird beispielsweise im Spinnbereich eine zu hohe Feuchte gemessen, so kann die den Spinnbereich zugeführte Zuluft verstärkt getrocknet werden.

Die Zuluft kann dabei aus Außenluft oder zumindest teilweise aus gereinigter und umgewälzter Abluft bestehen.

Um zu verhindern, dass aus dem Spinnbereich ein zu großer Volumenstrom des mit Bestandteilen aus dem Spinnprozess angereicherten Gasstoffstromes in den Wartungsbereich übergeht und dort das Raumklima belastet, kann die Abluft durch eine Prozessluftabsaugung wenigstens teilweise direkt aus dem Spinnbereich gesaugt werden. Vorzugsweise wird dabei die gesamte oder zumindest der überwiegende Teil der Prozessluft abgesaugt, bevor sie den Wartungsbereich erreichen kann. Hierzu können entsprechende Abzugsöffnungen im Spinnbereich selbst oder in unmittelbarer Nähe des Spinnbereichs angeordnet sein.

Die Absaugung in der Nähe des Luftspaltes ist allerdings nicht unproblematisch, da auf einen ausreichenden Abstand der Abzugsöffnungen von den Endlosformkörpern im Luftspalt sowie von der Oberfläche des Spinnbades zu achten ist, um einerseits die Spinnfäden durch die Abzugsströmung nicht zu stark im Luftspalt zu belasten und andererseits die Spinnbadoberfläche möglichst ruhig zu halten. Diese Ausgestaltung hat den Vorteil, dass durch die direkte Absaugung aus dem Spinnbereich sich das Raumklima im Spinnbereich direkter steuern und sich ein höherer Luftaustausch erzielen lässt.

Gemäß einer weiteren vorteilhaften Ausgestaltung kann die Abluft wenigstens teilweise direkt aus dem Wartungsbereich abgesaugt werden, um auch in diesem Bereich über die Abluftsteuerung das Raumklima direkt einstellen zu können.

Um in dem Raum, in dem der Spinnprozess stattfindet, eine möglichst gleichmäßige Temperaturverteilung zu erhalten und um die Ansammlung warmer Raumluft in Deckennähe zu vermeiden, kann gemäß einer vorteilhaften Ausgestaltung vorgesehen sein, die Abluft wenigstens teilweise aus dem deckennahen Bereich des Raumes abzusaugen.

Zur direkten Steuerung des Raumklimas im Aufenthaltsbereich, insbesondere im Wartungsbereich, kann ein Teil der Zuluft direkt in oder angrenzend zu dem Aufenthaltsbereich zugeführt werden.

In einer weiteren vorteilhaften Ausgestaltung wird der Zuluftstrom durch Positionierung der Ablufteinrichtungen entlang vorbestimmter Bahnen geführt. Auf diese Weise kann insbesondere eine Strömung im Wartungsbereich und/oder Spinnbereich erzielt werden, durch die das Bedienpersonal von den Auswirkungen des Gasstoffstromes und der Prozessluft weitestgehend abgeschirmt wird. Diese Abschirmung kann beispielsweise in Form eines Luftvorhanges erfolgen, d.h. durch eine Schicht vorzugsweise senkrecht entlang einer Front der Spinnanlage strömender Luft.

Als vorteilhaft hat sich in Versuchen erwiesen, wenn pro kg durch den Spinnprozess im Spinnbereich erzeugter Endlosformkörper zwischen 10 und 80 m³, vorzugsweise zwischen 10 und 30 m³, Abluft im und/oder in der Nähe des Spinnbereichs abgesaugt wird Die an dieser Stelle abgesaugt Abluft enthält vornehmlich Prozessluft.

Gemäße einer weiteren vorteilhaften Ausgestaltung können von der Beblasungseinrichtung pro kg durch den Spinnprozess im Spinnbereich erzeugter Endlosformkörper zwischen 3 und 50 m³ Gasstoff, vorzugsweise mit Geschwindigkeiten über 30 m/s in den Luftspalt geblasen werden.

Das Raumklima kann insbesondere dadurch verbessert werden, dass das 3- bis 10- fache Volumen des Raumes pro Stunde umgewälzt wird.

Die aus dem Raum abgesaugte Abluftmenge pro Stunde kann das 1,2- bis 2,5-fache des Gasstoffstromes aus der Beblasungseinrichtung betragen.

In einer weiteren vorteilhaften Ausgestaltung, die insbesondere auch unabhängig von der erfindungsgemäßen Einstellung eines vorbestimmten Raumklimas im Spinnbereich und/oder Wartungsbereich eine Erfindung darstellt, kann die Abluft nach der Abführung aus dem Raum, in dem der Spinnprozess stattfindet, gereinigt werden. Hierzu kann in einer vorteilhaften Weiterbildung die Abluft einer Reinigungsstufe zugeleitet werden, in der der Anteil der vom Spinnprozess stammenden Anteile in der Abluft verringert wird.

Die ausgeschiedenen Bestandteile - beispielsweise das rückgewonnene tertiäre Aminoxid oder die bei der thermischen Behandlung während der Herstellung der Suspensionslösung und Spinnprozess entstehenden Abbauprodukte - können wieder in den Spinnprozess zurückgeführt oder entsorgt werden. Die Reinigungsstufe kann insbesondere einen Tropfenabscheider, einen Quencher und/oder einen Aerosolabscheider umfassen sowie einen Verfahrensschritt, in dem eine im Wesentlichen biologische Reinigung mittels eines mikrobiellen Abbaus von Reaktionsprodukten des Spinnprozesses in Biofiltern stattfindet. Außerdem kann ein Elektrofilter mit vor- und/oder nachgeschalteter Reinigung vorgesehen sein, bei dem die Abluft durch elektrisch geladene Einbauten, wie Maschendrähte, geleitet wird. Der Aerosolabscheider ist vorzugsweise vor einer sauren oder basischen Wäsche angeordnet, um die in der Abluft, vor allem in der abgeführten Prozessluft enthaltenen Wertstoffe N-Methylmorpholin-N-Oxid (NMMNO), N-Methylmorpholin (NMM) und Morpholin (M) rückzugewinnen und wieder dem Spinnprozess zuzuführen.

Die erfindungsgemäße Vorrichtung kann auch als Nachrüstsatz ausgestaltet sein, mit der bestehende Anlagen zur Herstellung von Endlosformkörpern aus einer Spinnmasse enthalten Wasser, Cellulose und tertiäres Aminoxid nachgerüstet werden können.

Im Folgenden wird die Erfindung anhand von Ausführungsbeispielen mit Bezug auf die Zeichnungen genauer erläutert.

Es zeigen:
- Fig. 1: ein Ausführungsbeispiel eines Spinnprozesses zur Herstellung von Endlosformkörpern aus einer Spinnmasse enthaltend Wasser, Cellulose und tertiäres Aminoxid in einem schematischen Überblick;
- Fig. 2: eine perspektivische Skizze eines Ausführungsbeispiels einer Spinnanlage mit einem Spinnbereich und einem Aufenthaltsbereich;
- Fig. 3: eine perspektivische Skizze der Abluftabsaugung und Zuluftzuführung in einem Raum mit einer Spinnanlage;
- Fig. 4: einen schematischen Überblick über das Verfahren zur Reinigung der Abluft.

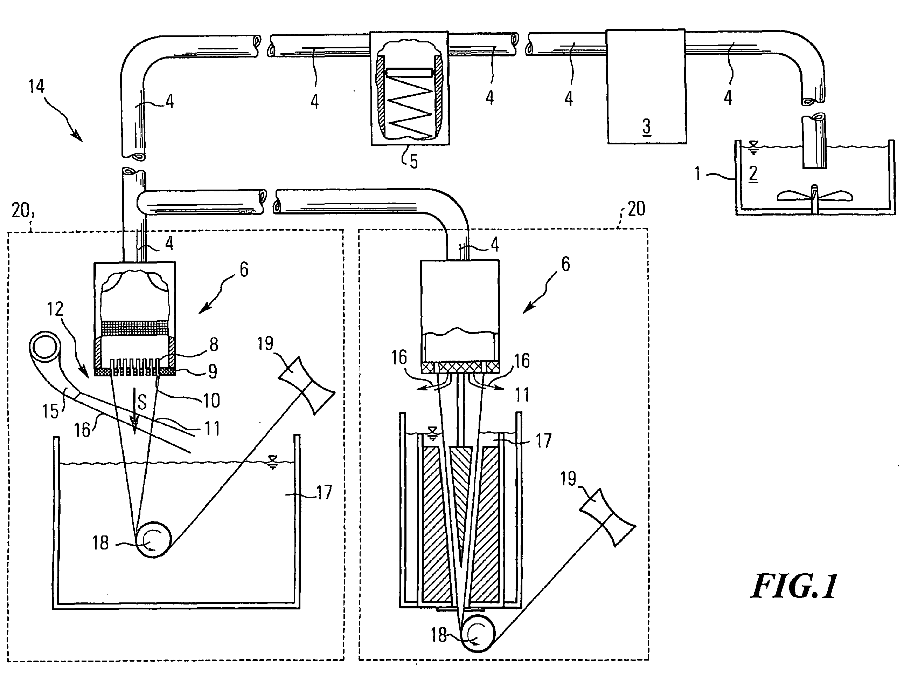

Zunächst wird ein Überblick über das Verfahren zur Herstellung von Endlosformkörpern aus einer Spinnmasse enthaltend Wasser, Cellulose und tertiäres Aminoxid mit Bezug auf die Fig. 1 überblicksartig beschrieben.

In einem Reaktionsbehälter 1 wird eine Spinnmasse 2 zubereitet, die Cellulose, Wasser und tertiäres Aminoxid, beispielsweise N-Methylmorpholin-N-oxid (NMMNO) sowie gegebenenfalls Stabilisatoren zur thermischen Stabilisierung der Cellulose und des Lösungsmittels enthält. Derartige Stabilisatoren können z.B. Propylgallat sowie alkalisch wirkende Medien oder Mischungen hiervon sein. Gegebenenfalls können weitere Additive wie beispielsweise anorganische und organische Salze, Titandioxid, Bariumsulfat, Graphit, Carboxymethylcellulosen, Polyethylenglykole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Ruße oder elektrisch leitfähige Ruße, Kieselsäure sowie organische Lösungsmittel wie z.B. leicht, mittel- und höher siedende Alkohole, Dimethylformamide, Dimethylacetamide, Dimethylsulfoxide als Verdünnungsmittel usw. in der Spinnmasse enthalten sein.

Die Spinnmasse 2 wird über eine Pumpe 3 durch ein Leitungssystem 4 gefördert, in dem ein Druckausgleichsbehälter 5 angeordnet sein kann, der Druck- und Volumenstromschwankungen im Leitungssystem ausgleicht. Auf diese Weise kann ein Extrusionskopf 6 kontinuierlich und gleichmäßig mit der Spinnmasse 2 versorgt werden. Das Leitungssystem 4 ist mit Temperierungseinrichtungen (nicht gezeigt) versehen, durch die die Temperatur der Spinnmasse 2 während des Transports durch das Leitungssystem 4 genau gesteuert werden kann. Eine genaue Temperatursteuerung ist notwendig, da die chemischen und mechanischen Eigenschaften der Spinnmasse stark temperaturabhängig sind. So sinkt die Viskosität der Spinnmasse 2 mit steigender Temperatur und steigender Scherrate.

Im Leitungssystem 4 sind des Weiteren in regelmäßigem Abstand Berstschutzeinrichtungen (nicht gezeigt) mit Berstscheiben vorgesehen, die aufgrund der Neigung der Spinnmasse zu einer spontanen exothermen Reaktion notwendig sind. Durch die Berstschutzeinrichtungen werden Beschädigungen am Leitungssystem 4 und am Druckausgleichsbehälter 5 und im nachgeschalteten Extrusionskopf 6 bei einer solchen spontanen exothermen Reaktion vermieden: Im Falle einer Reaktion in der Spinnmasse steigt der Druck im Leitungssystem 4, was zu einem Bersten der Berstscheiben und zum Ableiten des Berstdruckes an die Umgebung führt.

Eine spontane exothermen Reaktion in der Spinnmasse 2 kann insbesondere bei Überschreiten einer bestimmten Temperatur sowie einer Alterung der Spinnmasse 2, insbesondere in Totwassergebieten auftreten. Um eine solche Alterung der Spinnmasse in den Totwassergebieten zu vermeiden, ist das Leitungssystem in dem von der hochviskosen Spinnmasse 2 durchströmten Bereich strömungsgünstig ausgebildet. Im Extrusionskopf 6 wird die Spinnmasse in einem Düsenraum 7 auf eine Vielzahl von Extrusionskanälen 8 in Form von Spinnkapillaren verteilt, die in mehreren Reihen, die in Fig. 1 senkrecht zur Zeichenebenen verlaufen, angeordnet sind. Auf diese Weise wird durch einen Extrusionskopf 6 gleichzeitig eine Vielzahl von Endlosformkörpern hergestellt, die den Extrusionskopf in Form eines im Wesentlichen ebenen Vorhanges verlassen. Jede Spinnkapillare 8 ist zumindest abschnittsweise von einer Heizeinrichtung 9 umgeben, durch die die Wandtemperatur der Spinnkapillare steuerbar ist. Die Wandtemperatur der Spinnkapillare 8 beträgt um die 150 °C, die Temperatur der Spinnmasse etwa 100 °C. Die Heizeinrichtung 9 erstreckt sich vorzugsweise bis zu der in Strömungsrichtung S gelegenen Austrittsöffnung 10 des Extrusionskanals. Dadurch wird die Wand des Extrusionskanals 8 bis hin zur Extrusionskanalöffnung 10 beheizt.

Im Extrusionskanal 8 wird die Spinnmasse extrudiert und tritt danach in Form eines Spinnfadens 11 in einen Luftspalt 12 aus. Im Luftspalt 12 ist eine Beblasungseinrichtung 15 angeordnet, durch die ein Gasstoffstrom 16 auf den Vorhang von Endlosformkörpern 11 gerichtet ist. Der Gasstoffstrom 16 ist turbulent und weist eine Geschwindigkeit von mindestens 30 m/s auf. Er ist gegenüber der Horizontalen nach unten gerichtet und vom Extrusionskopf deutlich beabstandet. Seine Höhe in Durchleitungsrichtung der Endlosformkörper beträgt weniger als 10 mm.

Der Extrusionskopf 6 und die nachfolgend beschriebenen Elemente sind Teil einer Spinnanlage 14, die in einem in Fig. 1 nicht dargestellten Raum, beispielsweise einer Fabrikhalle steht.

Nach Durchquerung des Luftspaltes 12 taucht der Vorhang aus Endlosformkörpern in ein Fällbad 17 ein, in dem das Lösungsmittel aus den Endlosformkörpern ausgefällt wird.

Im Fällbad 17 ist eine Umlenkeinrichtung 18 angeordnet, durch die der ebene Vorhang in Richtung einer Bündelungseinrichtung 19 umgelenkt ist. Durch die Bündelungseinrichtung werden die einzelnen Endlosformkörper 11 auf im Wesentlichen einen Punkt gebündelt und als Faserbündel zu weiteren Verfahrensschritten (in Fig. 1 nicht gezeigt) geleitet.

Die Spinnanlage kann auch weitere Spinnstellen aufweisen, wie in Fig. 1 schematisch dargestellt ist. So kann an einer weiteren Spinnstelle ein Extrusionskopf 6 mit auf einer Kreisringfläche verteilten Extrusionsöffnungen vorgesehen sein, bei dem die Endlosformkörper nach Durchqueren des Luftspaltes 12 in ein Fällbad 17 tauchen. Im Fällbad werden die Endlosformkörper in einem kreisringförmigen Spalt zwischen einem Spinntrichter und einem Verdrängungskörper geführt. Am Austritt des Spinntrichters ist eine Blende angeordnet. Die Umlenkeinrichtung 18 ist außerhalb des Fällbades angeordnet.

Der in Fig. 1 dargestellte Spinnprozess wirkt sich insbesondere in dem in Fig. 1 gestrichelt dargestellten Spinnbereichen 20 auf das Raumklima aus. Das Raumklima in diesem Bereich wird durch die Temperaturstrahlung des beheizten Extrusionskopfes 6 sowie der noch heißen Endlosformkörper 11 und durch die vom Gasstoffstrom 16 aus den Endlosformkörpern 11 und dem Fällbad 17 gelösten Bestandteile sowie durch Dämpfe der heißen Spinnmasse und des Fällbades das Raumklima wesentlich geprägt. Der Spinnbereich 20 umfasst den Bereich, in dem die Spinnmittel 6, 12, 15, 16, 18 und 19 angeordnet sind und die luftklimatischen Bedingungen im Wesentlichen vom Spinnprozess beeinflusst werden. Die Spinnmittel umfassen die Bauteile der Spinnanlage, die an der Extrusion der Spinnmasse bis zur Koagulation der Endlosformkörper beteiligt sind.

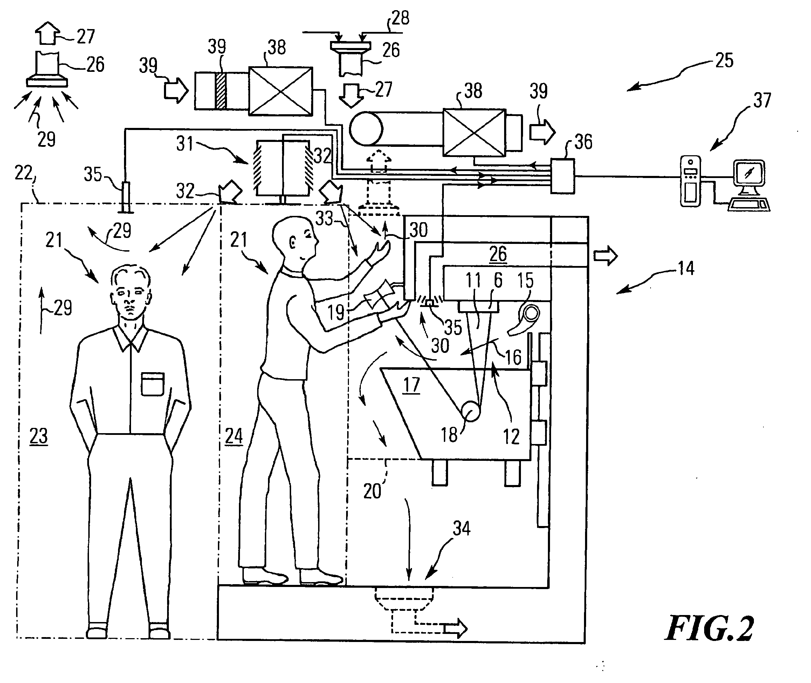

In Fig. 2 ist die Spinnanlage 14 mit ihrem Spinnbereich 20 schematisch dargestellt. In Fig. 2 ist des Weiteren schematisch Bedienpersonal 21 gezeigt, das sich in einem Aufenthaltsbereich 22 zu Inspektions- und Wartungsarbeiten an der Spinnanlage 21 aufhält. Der entlang der Spinnanlage 14 im Abstand von bis zu 1,5 - 3 m verlaufende Aufenthaltsbereich weist einen Inspektionsbereich 23 auf, in dem das Bedienpersonal 21 Kontrollgänge durchführt und den von der Spinnanlage 21 durchgeführten Spinnprozess inspizieren und überwachen kann. Hierzu sind die Spinnmittel frei einsehbar im Spinnbereich 20 so angeordnet, dass sie bei einem Kontrollgang einer Bedienperson durch einen Blick sofort erfasst werden können. Auf diese Weise werden Unregelmäßigkeiten des Spinnbereicht sofort durch das Bedienpersonal erkannt. Insbesondere liegt der Luftspalt 12 im zentralen Sehbereich einer im Inspektionsbereich 23 aufrecht gehenden oder stehenden Bedienperson 21.

Insbesondere wenn der Raum, in dem der Spinnprozess stattfindet, eine Fabrikhalle ist, sind der Aufenthaltsbereich 22 und der Spinnbereich 20 klein gegenüber dem Raum und können weniger als die Hälfte des Volumens des Raumes einnehmen. Dabei umfasst das raumklimatische Bilanzvolumen den Aufenthaltsbereich und den Spinnbereich.

Zur Durchführung von Wartungsarbeiten an den Spinnmitteln im Spinnbereich 20 begibt sich die Person in einen gegenüber dem Inspektionsbereich leicht erhöhten Wartungsbereich 24, der ebenfalls Teil des Aufenthaltsbereichs 22 ist. Im Wartungsbereich kann das Bedienungspersonal 21 möglichst auf sämtliche Spinnmittel zugreifen, ohne sich bücken zu müssen. Insbesondere befinden sich dabei sämtliche Spinnmittel in Greifweite der in Wartungsbereich 21 stehenden Person, so dass diese aus einer Körperhaltung heraus sämtliche Arbeiten im Spinnbereich 20 kann.

Das Raumklima im Aufenthaltsbereich 22 und im Spinnbereich 20 wird durch eine Vorrichtung 25 zur Regelung des Raumklimas hinsichtlich wenigstens einer Sollgröße auf einen Sollwert eingestellt. Die Vorrichtung 25 weist hierzu Ablufteinrichtungen 26 auf, durch die Abluft 27 aus der Umgebung der Spinnanlage 21 abgesaugt wird. Wie in Fig. 2 dargestellt ist, ist eine Ablufteinrichtung 26 auch in der Nähe der Raumdecke angeordnet, um von dort warme Luft, die sich im Raum oben sammelt, abzusaugen. Diese Ablufteinrichtungen saugen in erster Linie Raumluft ab, die nur gering von der Prozessluft belastet ist.

Weitere Ablufteinrichtungen sorgen dafür, dass möglichst wenig Prozessluft aus dem Spinnbereich in den Wartungsbereich und/oder von dem Wartungsbereich in den restlichen Raum gelangt.

Außerdem können Ablufteinrichtungen in oder in der Nähe des Inspektionsbereiches 23 vorgesehen sein, die die Luft 29 aus dem Wartungsbereich 23 absaugen. Schließlich ist eine Ablufteinrichtung vorgesehen, die im oder unmittelbar angrenzend an den Spinnbereich 20 so angeordnet ist, dass sie die Luft 30 vorzugsweise nur aus dem Spinnbereich absaugt. In Fig. 2 ist die Ablufteinrichtung 26 für die Prozessluft in der Spinnanlage 14 im Bereich oberhalb des Fällbades 17 integriert. Um zu vermeiden, dass durch die Absaugung eine Luftströmung erzeugt wird, die den Spinnprozess beeinträchtigt, ist die Absaugeinrichtung mit einer nicht dargestellten strömungstechnischen Einrichtung versehen, durch die die Richtung, aus der die Luft aus dem Spinnbereich eingesaugt wird, einstellbar ist. Ein weitere Ablufteinrichtung kann, wie durch die gestrichelte Linie dargestellt, oberhalb des Wartungsbereichs angeordnet sein.

Die von dieser Ablufteinrichtung abgesaugte Luft ist in erster Linie die Prozessluft mit Gasstoffstrom 16 und ist mit Bestandteilen aus dem Spinnprozess angereichert. Außerdem weist diese Luft aufgrund der Beheizung des Extrusionskopfes und der Temperatur der Endlosformkörper eine hohe Temperatur auf.

Ein weiteres Absaugsystem (nicht gezeigt) kann bei den Bersteinrichtungen angeordnet sein, um im Falle einer exothermen Reaktion und einem Bersten der Bersteinrichtungen sofort die entstehenden Gase abzusaugen.

Die Vorrichtung zur Raumklimatisierung 25 weist außerdem eine Zulufteinrichtung 31 auf, durch die dem Raum Zuluft 32 zuführbar ist. Die Zuluft 32 wird von der Zulufteinrichtung 31 so gerichtet, dass im Aufenthaltsbereich 22 selbst nur wenige Abbauprodukte aus dem Spinnprozess enthalten sind. Die Zuluft kann frische Außenluft oder umgewälzte und gereinigte Abluft sein, oder der Außenluft wird umgewälzte und gereinigte Abluft beigemischt.

Die Zulufteinrichtung 31 wirkt insbesondere im Spinnbereich 20 mit wenigstens einer Ablufteinrichtung 26 so zusammen, dass die Strömung 33 der Zuluft in vorbestimmte Richtungen geleitet wird. Auf diese Weise kann sichergestellt werden, dass bei Wartungsarbeiten von Bedienpersonal 21 im Wartungsbereich 24 dieses mit ausreichend Zuluft versorgt und von den raumklimatischen Auswirkungen des Spinnprozesses abgeschirmt wird.

Im Ausführungsbeispiel der Fig. 2 wird durch die Zulufteinrichtung 31 Zuluft 32 von oben zwischen die Person 21 und der Vorderfront der Spinnanlage 14 eingeblasen und gleichzeitig wird entlang der Vorderfront der Spinnanlage 14, abgeschirmt durch die Zuluft 32, Prozessluft aus dem Spinnbereich 20 durch die Ablufteinrichtung 26 abgesaugt. Zusätzlich kann durch eine optionale Ablufteinrichtung 34 im Bodenbereich der Spinnanlage 14 weitere Luft aus dem Spinnbereich 20 abgesaugt werden. Auf diese Weise bildet sich, wie in Fig. 2 durch die Pfeile angedeutet, zwischen der Bedienperson im Wartungsbereich und dem Spinnbereich, insbesondere dem Luftspalt, ein Luftvorhang aus.

Alternativ kann die Zuluft 32 auch als Quelllüftung (nicht dargestellt) von unten, beispielsweise vom Bodenbereich oder Fußraum der Spinnanlage oder von der Seite zugeführt werden.

Die Raumklimatisierungsvorrichtung 25 weist schließlich wenigstens einen Sensor 35 auf, durch den wenigstens eine für das Raumklima repräsentative Zustandsgröße erfassbar und an einen Regler 36 der Vorrichtung 25 weiter leitbar ist. Die von dem wenigstens einen Sensor erfassten Zustandsgrößen können je nach Lage des Sensors unterschiedlich sein: Im Ausführungsbeispiel der Fig. 2 ist beispielsweise ein Sensor 35 im Inspektionsbereich 23, ein weiterer Sensor 35 im Wartungsbereich 24 und ein dritter Sensor 35 angrenzend zum Luftspalt 12 oder im Luftspalt 12 selbst vorgesehen. Der Sensor in der Nähe des Luftspaltes 12 kann beispielsweise den Gehalt von tertiärem Aminoxid oder von anderen Abbauprodukten in der Raumluft, der Sensor 35 im Wartungsbereich die Feuchte und der Sensor 35 im Inspektionsbereich 23 die Temperatur erfassen. Auf diese Weise wird in jedem der Bereiche 20, 23, 24 die jeweils dort für das Raumklima kritische Größe erfasst, so dass in jedem Bereich 20, 23, 24 separat ein jeweils optimales Raumklima hinsichtlich der dort relevanten Zustandsgröße erzeugt werden kann.

Der Regler 36 vergleicht die von den Sensoren 35 erfassten, tatsächlichen Werte der für das Raumklima repräsentativen Zustandsgrößen und vergleicht diese mit in einem Speicherbereich (nicht gezeigt) abgelegten Sollwerten. Diese Sollwerte können über ein Ein-/Ausgabegerät 37, wie beispielsweise einen Computer, verändert und überwacht werden. Über das Ein-/Ausgabegerät 37 kann auch der derzeitige Betriebszustand der Vorrichtung 25 erfasst und dem Bedienpersonal 21 dargestellt werden.

Bei Abweichungen der von den Sensoren 35 tatsächlich erfassten Zustandsgrößen von den Sollwerten steuert der Regler 36 Pumpen 38 so an, dass die Volumenströme 39 von Zu-/ oder Abluft in Kombination oder einzeln so verändert werden, dass die Abweichungen von den Sollwerten reduziert werden. Auch die Verteilung der Volumenströme der durch die einzelnen Ablufteinrichtungen abgesaugten Abluft kann über die Bereiche 22, 23, 24 durch nicht gezeigte Klappensysteme verändert werden. Außerdem kann an einigen Stellen die Ausblasrichtung der Zuluft 32 verändert werden. Zusätzlich steuert der Regler 36 weitere Geräte 39, wie Heizeinrichtungen und Befeuchter oder Entfeuchter, mit denen bestimmte Zustandsgrößen der Zuluft wie Feuchte und Temperatur verändert und die Abweichungen des Raumklimas vom Sollwert bezüglich dieser Zustandsgrößen minimiert werden können.

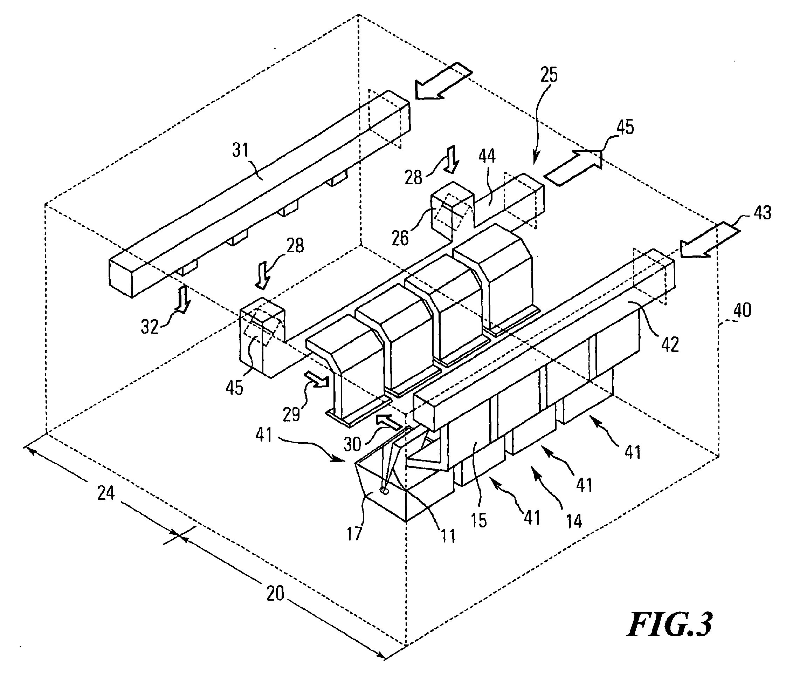

Fig. 3 zeigt einen Raum 40 mit der Spinnanlage 14 und der Raumklimatisierungsvorrichtung 25 in einer perspektivischen übersichtlichen Darstellung. Der Raum 40 ist beispielsweise eine Halle oder ein ähnlicher Raum in einer Fabrikationsanlage für Endlosformkörper.

Wie in der Fig. 3 zu erkennen ist, können bei der Spinnanlage 14 mehrere Spinnstationen 41 parallel nebeneinander angeordnet sein, wobei in jeder Spinnposition 41 wenigstens ein Vorhang aus Endlosformkörpern 11 erzeugt wird. Jede Spinnposition 41 weist eine ihr zugeordnete Beblasungseinrichtung 15 sowie ein Fällbad 17 auf. Im Raum 40 können auch mehrere Reihen von Spinnpositionen 41 hintereinander angeordnet sein. Jeder Spinnposition 41 kann ein eigener Spinnbereich 20 zugeordnet sein, der getrennt von den benachbarten Spinnbereichen mit Sensorik ausgestattet und auf ein bestimmtes Raumklima geregelt wird.

Der Volumenstrom des von der Beblasungseinrichtung 15 erzeugten Gasstoffstromes beträgt bei jeder Spinnstation 41 je nach Dimensionierung der einzelnen Spinnstation zwischen 10 und 500 m³/h, an jeder Spinnstation müssen zwischen 0,5 und 4 KW Wärme aus dem Spinnprozess abgeführt werden. Die Fläche jeder Spinnstation beträgt in etwa 2 bis 3 m², der Spinnbereich 20, der jeder Spinnstation zugeordnet ist, hat ein Volumen zwischen 10 und 20 m³.

In Fig. 3 sind der Übersichtlichkeit halber wesentliche Teile der Spinnanlage 14, wie beispielsweise der Extrusionskopf 6 oder die Bündelungseinrichtung 19 weggelassen.

Beim Ausführungsbeispiel der Fig. 3 werden die Beblasungseinrichtungen 15 der Spinnpositionen 41 aus einer gemeinsamen Sammelleitung 42 mit einem Gasstoffstrom 43 versorgt.

Jeder Spinnstation bzw. jedem Spinnbereich einer Spinnstation ist beim Ausführungsbeispiel der Fig. 3 jeweils eine Ablufteinrichtung 26 zugeordnet, durch die die Luft 30, enthaltend vornehmlich Prozessluft, aus dem Spinnbereich und die Luft 29, enthaltend zu größeren Anteilen Raumluft und nur zu geringeren Anteilen Prozessluft, aus dem Wartungsbereich abgesaugt und einer Sammelleitung 44 zugeführt wird.

Des Weiteren wird in der Sammelleitung 44 über deckennahe Ablufteinrichtungen 26 die warme Luft aus dem Deckenbereich des Raumes 40 abgesaugt. Die Verteilung der Volumenströme zwischen deckennaher Absaugung und Absaugung aus dem Spinnbereich 20 bzw. dem Aufenthaltsbereich 22 findet durch strömungstechnische Einbauten 45, wie beispielsweise Klappen oder Drosseln, statt.

Die Zuluft 31 wird gemäß Fig. 3 im Wartungsbereich 24 über der Kopfhöhe des Bedienpersonals zugeleitet. Alternativ kann die Zuluft auch vom Boden oder von der Seite zugeführt werden. Beim Ausführungsbeispiel der Fig. 3 stammen der Gasstoffstrom und die Zuluft aus unterschiedlichen Quellen, als Zuluft kann beispielsweise Frischluft zugeführt werden, als Gasstoff beispielsweise gereinigte Abluft.

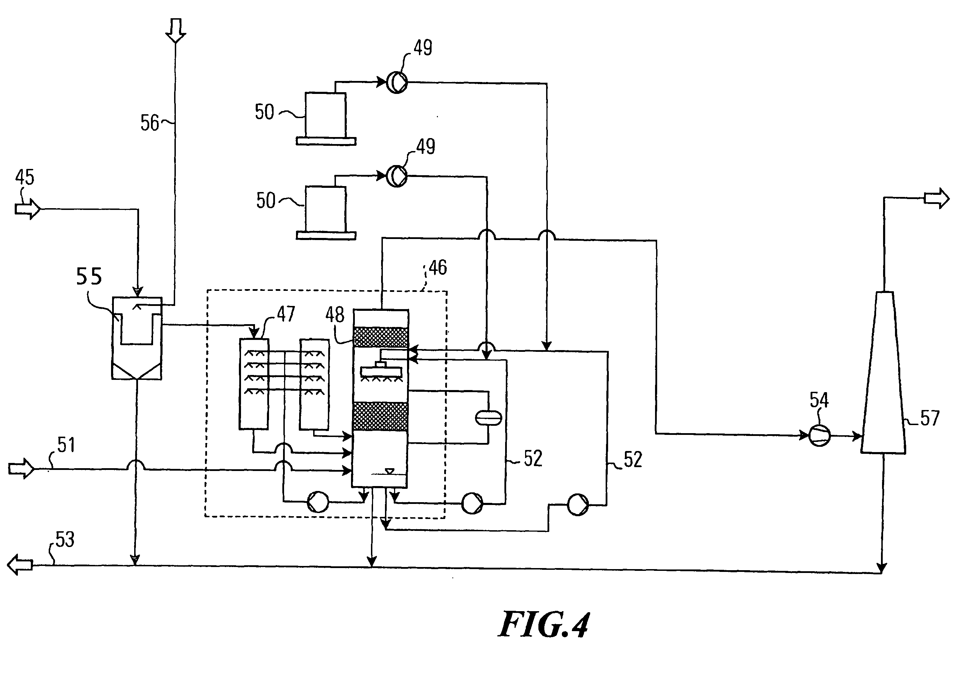

Die aus dem Raum 40 geleitete Abluft 45 weist, insbesondere wenn sie aus dem Spinnbereich 20 stammt, einen hohen Gehalt an aus dem Spinnprozess stammenden Bestandteilen auf. Diese Bestandteile werden durch eine Reinigungsstufe, wie sie beispielhaft in der Fig. 4 dargestellt ist, aus der Abluft 45 entfernt.

Fig. 4 zeigt eine schematische Darstellung einer solchen Reinigungsstufe. In Fig. 4 wird dabei beispielhaft die Abluft 45 aus zwei separaten Räumen 40 dem Reinigungsprozess zugeführt.

Zunächst wird die Abluft 45 einem Waschsystem 46 zugeführt. Das Waschsystem 46 umfasst einen Quencher 47 sowie wenigstens einen Tröpfchenabscheider 48. Der Tröpfchenabscheider 48 wird über Dosierpumpen 49 mit Waschmedien 50 versorgt. Solche Waschmedien können Wasser, HCl, H₂SO₄ oder eine Lösung enthaltend NaOH sein.

Des Weiteren wird dem Tröpfchenabscheider über eine Leitung 51 Frischwasser zugeführt. Ein Teil der Waschmedien kann über Leitungen 52 innerhalb des Tröpfchenscheiders umlaufen und wieder verwendet werden. Ein anderer Teil der sich im Tröpfchenabscheider 48 ansammelnden Flüssigkeit wird einer Abwasserleitung 53 zugeführt, der abgeleitete Teil wird durch das Frischwasser ergänzt.

Die gewaschene Abluft wird aus dem Waschsystem 46 über ein Gebläse 54 aus dem oberen Teil des Tröpfchenabscheiders abgesaugt.

Schließlich wird die Abluft einem Kamin 57 zugeführt, wo sie als Reingas in die Außenluft entströmt. Der Niederschlag aus dem Kamin wird ebenfalls der Abwasserleitung zugeführt. Alternativ kann die gereinigte Abluft auch der in dem Raum 40 geleiteten Zuluft beigemengt werden.

Die Abluft kann vor dem Waschsystem einem Aerosolabscheider 55 zugeführt werden um die in der Abluft enthaltenen Wertstoffe wie N-Methyl-Morpholin-N-Oxide (NMMNO), N-Methylmorpholin (NMM), Morpholin (M) sowie weitere Reaktionsprodukte vor einer allfälligen sauren oder basischen Wäsche rückgewinnen zu können. Dabei kann ein Elektrofilter vorgesehen sein, in dem die Abluft ein elektrisch geladenes Filtersystem passiert. Vor und/oder nach dem Elektrofilter kann die Abluft gewaschen werden.

Der Aerosolabscheider wird über eine Leitung 56 ebenfalls mit Frischwasser versorgt. Das Abwasser aus dem Aerosolabscheider 55 wird ebenfalls der Abwasserleitung 53 zugeführt.

Die Abluftwaschanlage kann wie dargestellt, mehrstufig, mit zusätzlichen Wascheinrichtungen aber auch nur mit Teilen der dargestellten Wascheinrichtung versehen sein. Ein Ventilator kann vor, innerhalb oder nach der Waschanlage positioniert sein.

Zusätzlich zu den in der Fig. 4 dargestellten Bestandteilen kann die Reinigungsstufe auch eine mikrobielle Reinigung aufweisen, wo über Biofiltration ein mikrobieller Abbau von Bestandteilen in der Abluft aus dem Spinnprozess entfernt werden.

In den nachstehend angeführten Beispielen wurde durch Variation der Prozessbedingungen Einfluss auf das Klima bzw. die Luftverhältnisse im Spinnbereich beziehungsweise in dem Raum, in dem der Spinnprozess stattfindet, genommen und dabei die Auswirkungen auf den Spinnprozess und die Bedienbarkeit der Spinnanlage analysiert.

Eine NMMNO-Spinnmasse bestehend aus 13 % Zellstoff der Type MoDo mit einem mittleren DP von 680, 76 % NMMNO und 11 % Wasser wurde bei unterschiedlichen Spinnlösungstemperaturen der Spinnmaschine zugeführt.

Die Spinnlösung wurde mittels einer Rechteckdüse fadenförmig in einen Luftspalt extrudiert und in einem NMMNO-hältigen Fällbad ausgefällt. Die aus der Spinndüse austretenden in Fadenform austretenden Endlosformkörper wurden mittels verschiedener Beblasungsvorrichtungen einem Luftstrom ausgesetzt.

Die Höhe der Luftspalte in Durchleitungsrichtung der Endlosformkörper betrug zwischen 15 und 25 mm.

Hergestellt wurde in allen Fällen eine Lyocell Faser mit einer Faserfeinheit von ca. 1,4 dtex. Die dabei verwendeten Vorrichtungen sind beispielsweise in der DE 100 19 660 A1 und in der DE 100 37 923 A1 beschrieben.

Die Anlage wurde bei den Versuchen zur genauen Bilanzierung der Luftmengen eingehaust, so dass die nachfolgend dargestellte Produktionsdichte ausgedrückt in Faserproduktion je Raumfläche [kg/h je m²] dargestellt werden konnte.

In den nachfolgenden Beispielen wurden die Menge und die Temperatur der Prozessluft, der Prozessabluft und die Raumluft variiert und gemessen.

Die Luftmengenströme wurden mit Hilfe eines Flügelrad-Volumenstrommessers der Fa. Testoterm ermittelt. Zur Bestimmung der Lufttemperaturen wurde ein Widerstandsthermometer eingesetzt.

Die Temperatur der Raumzuluft betrug einheitlich ca. 25°C.

Die in den Beispielen 2 bis 8 eingesetzten Absaugvorrichtungen wurden durch Variation der Ansauggeometrie so eingestellt, dass der Falschluftfaktor, das ist das dimensionslose Verhältnis von Prozessabluftmenge zu Prozesszuluftmenge, d. h. der Gasstrommenge aus der Beblasungseinrichtung, den in den Beispielen angeführten Werten entsprach. Dabei bezeichnet ein Falschluftfaktor von 0 ein offenes System, bei dem keine Prozessluftabsaugung stattfindet. Ein Falschluftfaktor von 1 bezeichnet ein geschlosses, abgeschottetes System, bei dem exakt die Luft aus der beblasungseinrichtung abgesaugt wird, und ein Falschluftfaktor >1 bezeichnet ein teiloffenes System, bei dem die Prozessabsaugung an den Saugkanten zusätzlich Raumluft ansaugt.

Schließlich wurde noch die Geruchsbelastung im Wartungsbereich, das Spinnverhalten und die Zugänglichkeit bzw. die Bedienbarkeit der Anlage für eine im Wartungsbereich stehende Person subjektiv beurteilt. Bei der Geruchsbelastung wurde auch berücksichtigt, wenn im Spinnbereich eine sichtbare Rauchentwicklung, die typischerweise hohe Temperaturen anzeigt, auftrat. Dies führte zu einer schlechteren Bewertung.

Zur besseren Vergleichbarkeit wurden sämtliche Werte und Daten auf 1 kg/h produzierte Faser bezogen.

### Beispiel 1:

Die Beblasungsvorrichtung wies eine Blasspaltweite von 8mm auf, damit wurde ein laminarer Blasluftstrom mit moderater Blasgeschwindigkeit aber großem Volumenstrom (28 m³ Luft je kg Produkt) erzeugt.

Der Spinnvorgang wurde ohne eigene Absaugvorrichtung für Prozessabluft durchgeführt.

Die austretende erwärmte Prozessluft trat ungehindert in den Spinn- bzw. Bedienbereich aus. Im Bedienbereich stellte sich in Kopfhöhe einer im Wartungsbereich sich befindlichen Bedienperson eine Temperatur von knapp 40 °C ein, zudem war eine relativ starke Geruchsbelastung, sowie weißer Rauch zu beobachten.

Die Raumabluftmenge wurde mittels eines frequenzumformergesteuerten Abluftventilators auf ca. 48 m³/kg eingestellt, das entspricht einer Luftwechselzahl (Austausch des Luftvolumens im Raum je Stunde) von in etwa 7.

Die Luft wurde mit einer Temperatur von ca. 30 °C abgeführt.

Das Spinnverhalten war gut, durch das Nichtvorhandensein einer Absaugvorrichtung im Spinnbereich war auch eine gute Bedienbarkeit aus dem Wartungsbereich und eine gute Einsehbarkeit aus dem Inspektionsbereich gegeben.

### Beispiel 2:

Im Beispiel 2 wurde bei ansonsten gleichen Bedingungen eine Absaugvorrichtung, die sich über die gesamte Luftspalthöhe und Düsenbreite erstreckte, im Spinndüsenbereich, wie in Fig. 2 dargestellt, angebracht. Diese Absaugvorrichtung bewirkte eine nahezu vollständige Abschottung des Spinnbereichs gegenüber dem Bedienbereich.

Durch diese Anordnung wurde die Prozessluft mittels der Beblasungsvorrichtung zu den Fäden geblasen und gleichzeitig per Absaugvorrichtung durch die Fadenschar hindurch gesaugt.

Der Falschluftfaktor der Absaugvorrichtung betrug in diesem Fall 1, da die Prozesszuluftmenge und Prozessabluftmenge auf denselben Wert eingestellt wurden.

Das Spinnverhalten in diesem Beispiel war schlechter als in Beispiel 1, die Luftführung scheint durch den von der Absaugung auf den Blasluftstrahl ausgeübten Effekt negativ beeinflusst zu werden.

Die Anordnung der Absaugvorrichtung direkt vor den Fäden verhinderte jegliche Einsicht zu den Fäden während des Betriebs, was eine starke Einschränkung der Bedienbarkeit bedeutete. Zu routinemäßigen Inspektionszwecken während des Betriebs war es jedes Mal notwendig, die Absaugung zu entfernen. Durch dieses Hantieren bestand immer wieder Gefahr, Spinnfehler zu erzeugen.

Im Seitenbereich der Düsen kam es zu leichter Rauchentwicklung durch die nicht vollständig erfasste Prozessabluft, was mit einer leichten Geruchsbelastung im Bedienbereich einherging.

Im Bedienbereich stellte sich in Kopfhöhe eine Temperatur von ca. 30 °C ein.

### Beispiel 3

Beispiel 3 wurde gleich geführt wie Beispiel 2, allerdings wurde anstatt eines laminaren Blasluftstroms mit moderater Blasgeschwindigkeit ein turbulenter Blasluftstrom mit hoher Geschwindigkeit durch die Fadenschar hindurchgeführt. Diese Blasvorrichtung bestand aus einreihigen Mehrkanaldüsen der Type Lechler Whisperblast. Die Luftmengen (Prozesszuluft und Prozessabluft) waren mit ca. 10,7 m³/kg wesentlich geringer als bei den vorangegangenen Beispielen.

Das Spinnverhalten wurde durch das Vorhandensein der Absaugvorrichtung auch in diesem Beispiel negativ beeinflusst. An den Randbereichen der Absaugung trat auch bei diesen Beispielen weißer Rauch mit einhergehender Geruchsbelastung auf, durch die deutlich geringeren Prozessluftmengen war allerdings die Belastung etwas geringer als in Beispiel 2.

### Beispiel 4 bis 6

In den Beispielen 4 bis 6 wurde auf die Beblasungsvorrichtung von Beispiel 1 und 2 (laminarer Blasluftstrom mit moderater Blasgeschwindigkeit aber großem Volumenstrom) zurückgegriffen.

Im Gegensatz zu Beispiel 1 und 2 wurde in diesen Beispielen einerseits eine Absaugvorrichtung verwendet, die durch ihre geometrische Ausführung es ermöglicht, zusätzlich zur Prozessabluft auch Raumluft anzusaugen und zusätzlich auch die Einsehbarkeit der Spinnfäden ermöglicht. Die geometrische Anordnung der Absaugvorrichtung wurde in diesen drei Beispielen dermaßen variiert, dass der Falschluftfaktor, das Verhältnis zwischen Prozesszuluftmenge und Prozessabluftmenge, sich zwischen 1,7 und 2 bewegte. Zudem wurden unterschiedliche Spinnlösungstemperaturen getestet und Prozessluftmengen von 28 bis 45 m³/kg (ja nach Spinntemperatur) eingesetzt.

In all diesen Beispielen stellte sich die Temperatur im unmittelbaren Spinnbereich auf einen Wert von ca. 30 °C ein. Es gab keine Geruchsbelastung und auch keine weißen Rauchfahnen. Die Bedienbarkeit ohne Beeinflussung des Spinnprozesses bzw. die Einsehbarkeit der Spinnfäden während des Betriebs war durch die beschriebene geometrische Anordnung gegeben. Das Spinnverhalten stellte sich als gut dar.

### Beispiel 7 und 8

In den Beispielen 7 und 8 wurde auf die Beblasungsvorrichtung von Beispiel 3 (turbulenter Blasluftstrom mit hoher Geschwindigkeit unter Einsatz von einreihigen Mehrkanaldüsen der Type Lechler Whisperblast) zurückgegriffen. Die Prozesszuluftmenge bewegte sich im Bereich zwischen 8,5 und 10,5 m³/kg, war also wesentlich geringer als in den vorangegangenen Beispielen.

Die Absaugvorrichtung war ausgeführt wie bereits in den Beispielen 4 bis 6 beschrieben.

Der Falschluftfaktor der Absaugvorrichtung, das Verhältnis zwischen Prozesszuluftmenge und Prozessabluftmenge, bewegte sich zwischen 2 und 2,5.

In den beiden Beispielen stellte sich die Temperatur im unmittelbaren Spinnbereich auf einen Wert von ca. 30°C ein. Es gab keine Geruchsbelastung und auch keine weißen Rauchfahnen. Die Bedienbarkeit ohne Beeinflussung des Spinnprozesses bzw. die Einsehbarkeit der Spinnfäden während des Betriebs war durch die beschriebene geometrische Anordnung gegeben.

Das Spinnverhalten stellte sich bei den Beispielen 7 und 8 als sehr gut dar. Selbst eine Erhöhung der Produktionsdichte (kg/h Produkt je m² Spinnhallenfläche) brachte keine negativen Effekte mit sich.

Abschließend kann man zu den durchgeführten Versuchen bemerken, dass die Ausführungen der Beispiele 7 und 8 den anderen Varianten hinsichtlich des Klimas im Spinnbereich, der Spinnbarkeit, der Bedienbarkeit und der Faserqualität vorzuziehen sind.

| | Bsp. 1 | Bsp. 2 | Bsp. 3 | Bsp. 4 | Bsp. 5 | Bsp. 6 | Bsp. 7 | Bsp. 8 | |
|---|---|---|---|---|---|---|---|---|---|
| Produktionsdichte (kg/h Produkt je m² Spinnhallenfläche) | 2,3 | 2,3 | 2,3 | 2,3 | 2,3 | 2,3 | 2,3 | 3,3 | kg/hm² |
| spez. Raumvolumen (m³ je kg/h Faserproduktion) | 3,4 | 3,4 | 3,4 | 3,4 | 3,4 | 3,4 | 3,4 | 2,5 | m³ je kg/h |
| Raum-Wärmelast aus Antrieben, Wärmestrahlung, etc | 231,5 | 231,5 | 231,5 | 231,5 | 231,5 | 231,5 | 231,5 | 165,3 | W je kg/h |
| Prozessluftmenge je kg Produkt | 28,4 | 28,4 | 10,7 | 28,4 | 33,8 | 44,4 | 8,9 | 10,2 | m³/kg |
| Spinnlösungstemperatur an Düse **) | 95 | 95 | 95 | 95 | 110 | 125 | 95 | 105 | °C |
| Raumtmp. | 25 | 25 | 25 | 25 | 25 | 25 | 25 | 25 | °C |
| Zulufttmp. - Beblasung | 17 | 21 | 23 | 18 | 20 | 21 | 26 | 24 | °C |
| Falschluftfaktor Prozessabsaugung (Verhältnis Absaugmenge / Prozesszuluft) *) | 0,0 | 1,0 | 1,0 | 2,2 | 1,9 | 1,7 | 2,5 | 2,0 | |
| Durch Prozessabsaugung abgesaugte Raumluft - zu Abluftreinigung | --------- | 28,4 | 10,7 | 62,6 | 64,2 | 75,6 | 22,2 | 20,3 | m³/kg |
| Temperatur der Luft vor Abluftreinigung | ----- | 33,3 | 55,8 | 29,6 | 30,1 | 29,6 | 46,0 | 47,0 | °C |
| Raumabluft (Raumabsaugung über Dach an Decke abgesaugt) | 48,3 | 23,1 | 23,1 | 0,6 | 4,3 | 3,6 | 4,0 | 2,2 | m³/kg |
| Ablufttmp. an Umgebung | 30,4 | 31,0 | 31,0 | 29,0 | 29,0 | 29,0 | 33,0 | 33,0 | °C |
| Luftwechselzahl im Raum (Luftvolumenaustausch je Stunde) | 5,8 | 6,7 | 6,7 | 10,1 | 10,1 | 10,1 | 5,0 | 5,0 | |
| Temperaturdifferenz Raumzuluft / Raumabluft | 7,0 | 6,0 | 6,0 | 4,0 | 4,0 | 4,0 | 8,0 | 8,0 | °C |
| Lufttemp. im unmittelbaren Bedienbereich | 35-40 | 25-30 | 25-30 | 25-30 | 25-30 | 25-30 | 25-30 | 25-30 | |
| Geruchsbelastung im unmittelbaren Bedienbereich | ja | gering | etwas | nein | nein | nein | nein | nein | |
| Spinnverhalten | gut | schlecht | mittel | gut | gut | gut | sehr gut | sehr gut | |
| Zugänglichkeit Bedienbarkeit | gut | schlecht | schlecht | gut | gut | gut | gut | gut | |

| | | | | | | | | | |
|---|---|---|---|---|---|---|---|---|---|
| *) 0..... Offenes System, 1..... Geschlossenes System, >1..... Teiloffenes System **) Bei Spinnlösungstemp. 110°C bzw. 125°C wurde Cellulosekonzentration auf 13,5% angehoben | | | | | | | | | |

## Patentansprüche

1. Verfahren zur wenigstens bereichsweisen Steuerung des Klimas in einem Raum (40), in dem in einem gegenüber dem Raum (40) offenen Spinnbereich (20) ein Spinnprozess durchgeführt wird, wobei im Spinnbereich (20) aus einer Spinnmasse enthaltend Wasser, Cellulose und tertiäres Aminoxid Endlosformkörper (11) extrudiert und die extrudierten Endlosformkörper vor dem Eintauchen in ein Fällbad (17) in einem Luftspalt mit einem Gasstoffstrom (16) beblasen werden, und die Spinnanlage durch sich in einem an den Spinnbereich angrenzenden Aufenthaltsbereich (22, 23, 24) befindliches Bedienpersonal gewartet und inspiziert werden kann, und wobei die Abluft (27) aus dem und/oder die Zuluft (32) in den Raum (40) unter Berücksichtigung des Gasstoffstromes (16) so gesteuert werden, dass im Spinnbereich (20) und/oder Aufenthaltsbereich (22, 23, 24) ein vorbestimmtes Raumklima eingestellt wird.

2. Verfahren nach Anspruch 1, wobei im Spinnbereich (20) und/oder Aufenthaltsbereich (22, 23, 24) ein vorbestimmter Gehalt an Aminen und/oder Abbauprodukten von tertiärem Aminoxid in der Raumluft eingestellt wird.

3. Verfahren nach Anspruch 1 oder 2, wobei im Spinnbereich (20) und/oder Aufenthaltsbereich (22, 23, 24) ein vorbestimmter Gehalt an Abbauprodukten des Spinnprozesses in der Raumluft eingestellt wird.

4. Verfahren nach einem der oben genannten Ansprüche, wobei im Spinnbereich (20) und/oder Aufenthaltsbereich (22, 23, 24) eine vorbestimmte Feuchte der Raumluft eingestellt wird.

5. Verfahren nach einem der oben genannten Ansprüche, wobei im Spinnbereich (20) und/oder Aufenthaltsbereich (22, 23, 24) eine vorbestimmte Temperatur der Raumluft eingestellt wird.

6. Verfahren nach einem der oben genannten Ansprüche, wobei das Raumklima durch eine Steuerung des Volumenstroms (39) der Abluft (27) eingestellt wird.

7. Verfahren nach einem der oben genannten Ansprüche, wobei das Raumklima durch eine Steuerung des Volumenstroms (39) der Zuluft (32) eingestellt wird.

8. Verfahren nach einem der oben genannten Ansprüche, wobei die Abluft (27) wenigstens teilweise direkt aus dem Spinnbereich (20) gesaugt wird.

9. Verfahren nach einem der oben genannten Ansprüche, wobei die Abluft (27) wenigstens teilweise direkt aus dem Aufenthaltsbereich (22, 23, 24) abgesaugt wird.

10. Verfahren nach einem der oben genannten Ansprüche, wobei die Abluft (27) wenigstens teilweise aus einem deckennahen Bereich des Raumes (40) abgesaugt wird.

11. Verfahren nach einem der oben genannten Ansprüche, wobei im Spinnbereich und/oder in der Nähe des Spinnbereichs zwischen 10 und 80 m³, vorzugsweise zwischen 10 und 30 m³, Abluft, enthaltend überwiegend Prozessluft, pro kg produzierte Menge an Endlosformkörpern abgesaugt wird.

12. Verfahren nach einem der oben genannten Ansprüche, wobei zwischen 3 und 50 m³ Gasstoff pro kg produzierter Endlosformkörper durch die Beblasungseinrichtung in den Luftspalt geblasen werden.

13. Verfahren nach einem der oben genannten Ansprüche, wobei das zwischen 1,2-und 2,5-fache an Abluft aus dem Raum abgesaugt wird, als durch den Gasstoff in den Raum zugeleitet wird.

14. Verfahren nach einem der oben genannten Ansprüche, wobei das 3- bis 10-fache Volumen des Raumes pro Stunde ausgetauscht wird.

15. Verfahren nach einem der oben genannten Ansprüche, wobei die Abluft (27) einer Reinigungsstufe mit einem Waschsystem (46) zugeleitet wird, in dem der Anteil der vom Spinnprozess stammenden Anteile der Abluft verringert wird.

16. Verfahren nach einem der oben genannten Ansprüche, wobei in der Reinigungsstufe eine im wesentlichen biologische Reinigung mittels eines mikrobiellen Abbaus von Reaktionsprodukten des Spinnprozesses stattfindet.

17. Verfahren nach Anspruch 15 oder 16, wobei die Abluft (27) einem Tropfenabscheider (48) zugeführt wird.

18. Verfahren nach einem der Ansprüche 15 bis 17, wobei die Abluft (27) einem Aerosolabscheider (55) zugeführt wird.

19. Verfahren nach einem der oben genannten Ansprüche, wobei die Abluft (27) einem Elektrofilter mit vor- und/oder nachgeschalteter Wäsche zugeleitet wird.

20. Verfahren nach einem der oben genannten Ansprüche, wobei wenigstens ein Teil der Zuluft in unmittelbarer Nähe des Spinnbereichs (20) zugeführt wird.

21. Verfahren nach einem der oben genannten Ansprüche, wobei wenigstens ein Teil der Zuluft (32) im Aufenthaltsbereich (22, 23, 24) zugeführt wird.

22. Vorrichtung (25) zur Steuerung des Raumklimas in einem Raum (40) mit einem einer Spinnanlage (14) zugeordneten Spinnbereich (20), wobei der Spinnbereich (20) einen von einem Fällbad (17) begrenzten, gegenüber dem Raum (40) offenen Luftspalt (12) aufweist, durch den aus einer Spinnmasse enthaltend Wasser, Cellulose und tertiäres Aminoxid extrudierte Endlosformkörper (11) geleitet und in dem eine Beblasungseinrichtung (15) angeordnet ist, durch die Endlosformkörper (11) mit einem Gasstoffstrom (16) beblasbar sind, und einem Aufenthaltsbereich (22, 23, 24) zur Wartung und Inspektion der Spinnanlage (14) durch Bedienpersonal (21), wobei die Vorrichtung (25) eine Ablufteinrichtung (26) und eine Zulufteinrichtung (31) sowie eine Regeleinrichtung (36) aufweist, wobei durch die Regeleinrichtung im Spinnbereich (20) und/oder Aufenthaltsbereich (22, 23 24) ein vorbestimmtes Raumklima einstellbar ist.

23. Vorrichtung nach Anspruch 22, wobei im Spinnbereich ein Raumluftsensor angeordnet ist, durch den ein für die Kontamination der Raumluft durch den Spinnprozess repräsentatives Signal ausgebbar ist.

24. Vorrichtung nach Anspruch 22 oder 23, wobei im Wartungsbereich ein Raumluftsensor angeordnet ist, durch den ein für die Kontamination der Raumluft durch den Spinnprozess repräsentatives Signal ausgebbar ist.

25. Nachrüstsatz für eine Spinnanlage zur Herstellung von Endlosformkörpern aus einer Spinnmasse enthalten Cellulose, Wasser und tertiäres Aminoxid, wobei die Spinnanlage einen Extrusionskopf (6) mit Extrusionsöffnungen, einen Luftspalt (12) mit einer Beblasungseinrichtung (15) und ein Fällbad (17) umfasst, und wobei der Nachrüstsatz nach einem der Ansprüche 22 bis 24 nachträglich in eine bestehende Spinnanlage einbaubar ausgestaltet ist.

26. Spinnanlage mit einer Spinnanlage zur Herstellung von Endlosformkörpern aus einer Spinnmasse enthalten Cellulose, Wasser und tertiäres Aminoxid, wobei die Spinnanlage einen Extrusionskopf (6) mit Extrusionsöffnungen, einen Luftspalt (12) mit einer Beblasungseinrichtung (15) und ein Fällbad (17) sowie mit eienr Vorrichtung nach einem der Ansprüche 22 bis 24.

## Claims

1. Method for controlling the air condition at least section-wise in a room (40), in which a spinning process is performed in a spinning area (20) open with respect to the opposite room (40), whereby endless molded articles (11) are extruded from a spinning mass containing water, cellulose and tertiary amine oxide in the spinning area (20) and the extruded endless molded articles are air-quenched with a gaseous substance stream (16) in an air gap prior to their immersion in a precipitating bath (17), and whereby the spinning plant can be inspected and maintained by operating staff staying in a staying area (22, 23, 24) adjacent to the spinning area, and whereby the exhaust air (27) from the and/or the additional air (32) into the room (40) is controlled by taking the gaseous substance stream (16) into account, such that predetermined room air conditions are adjusted in the spinning area (20) and/or the maintenance area (22, 23, 24).

2. Method according to claim 1, wherein a predetermined content of amines and/or degradation products of tertiary amine oxide in the room air is adjusted in the spinning area (20) and/or the staying area (22, 23, 24).

3. Method according to claim 1 or 2, wherein a predetermined content of degradation products of the spinning process in the room air is adjusted in the spinning area (20) and/or staying area (22, 23, 24).

4. Method according to one of the preceding claims, wherein a predetermined humidity of the room air is adjusted in the spinning area (20) and/or staying area (22, 23, 24).

5. Method according to one of the preceding claims, wherein a predetermined temperature of the room air is adjusted in the spinning area (20) and/or staying area (22, 23, 24).

6. Method according to one of the preceding claims, wherein the room air conditions are adjusted by controlling the volume flow rate (39) of the exhaust air (27).

7. Method according to one of the preceding claims, wherein the room air conditions are adjusted by controlling the volume flow rate (39) of the additional air (32).

8. Method according to one of the preceding claims, wherein the exhaust air (27) is at least partially sucked out directly from the spinning area (20).

9. Method according to one of the preceding claims, wherein the exhaust air (27) is at least partially sucked out directly from the staying area (22, 23, 24).

10. Method according to one of the preceding claims, wherein the exhaust air (27) is at least partially sucked out from a portion of the room (40) close to the ceiling.

11. Method according to one of the preceding claims, wherein between 10 and 80 m³, preferably between 10 and 30 m³ exhaust air primarily containing process air per kg produced quantity of endless molded articles are sucked off in the spinning area and/or the proximity of the spinning area.

12. Method according to one of the preceding claims, wherein between 3 and 50 m³ gaseous substance per kg produced endless molded articles are blown into the air gap by means of the air-quenching device.

13. Method according to one of the preceding claims, wherein between 1.2 and 2.5 times the exhaust air is sucked out of the room in comparison to what is supplied to the room by the gaseous substance.

14. Method according to one of the preceding claims, wherein 3 to 10 times the volume of the room is exchanged per hour.

15. Method according to one of the preceding claims, wherein the exhaust air (27) is supplied to a purification stage with a washing system (46), in which the portion of the exhaust air portions deriving from the spinning process are reduced.

16. Method according to one of the preceding claims, wherein a substantially biological purification by means of a microbial degradation of reaction products of the spinning process takes place in the purification stage.

17. Method according to claim 15 or 16, wherein the exhaust air (27) is supplied to a demister (48).

18. Method according to one of claims 15 to 17, wherein the exhaust air (27) is supplied to an aerosol separator (55).

19. Method according to one of the preceding claims, wherein the exhaust air (27) is supplied to an electrostatic filter with a washing stage connected upstream or downstream thereof.

20. Method according to one of the preceding claims, wherein at least a part of the additional air (32) is supplied in the direct proximity of the spinning area (20).

21. Method according to one of the preceding claims, wherein at least a part of the additional air (32) is supplied in the staying area (22, 23, 24).

22. Device (25) for controlling the room air conditions in a room (40) having a spinning area (20) associated with a spinning plant (14), wherein the spinning area (20) comprises an air gap (12) open with respect to the room (40) and limited by a precipitating bath (17), through which endless molded articles (11) extruded from a spinning mass containing water, cellulose and tertiary amine oxide are passed and in which an air-quenching device (15) is arranged, by which the endless molded articles (11) are air-quenched with a gaseous substance stream (16), and having a staying area (22, 23, 24) for the maintenance and inspection of the spinning plant (14) by operating staff (21), wherein the device (25) comprises an exhaust air device (26), an additional air device (31), and a controller (36), said controller (36) being adapted to adjust predetermined room air conditions in the spinning area (20) and/or the staying area (22, 23, 24).

23. Device according to claim 22, wherein a room air sensor is arranged in the spinning area, by which a signal representative of the contamination of the room air by the spinning process can be outputted.

24. Device according to claim 22 or 23, wherein a room air sensor is arranged in the maintenance area, by which a signal representative of the contamination of the room air by the spinning process can be outputted.

25. Retrofit kit for a spinning plant for the production of endless molded articles from a spinning mass containing cellulose, water and tertiary amine oxide, wherein the spinning plant comprises an extrusion head (6) with extrusion openings, an air gap (12) with an air-quenching device (15) and a precipitating bath (17), and wherein the retrofit kit according to one of claims 22 to 24 is designed to be retrofittingly installable in an existing spinning plant.

26. Spinning plant comprising a spinning plant for the production of endless molded articles from a spinning mass containing cellulose, water and tertiary amine oxide, wherein the spinning plant comprises an extrusion head (6) with extrusion openings, an air gap (12) with an air-quenching device (15) and a precipitating bath (17), as well as a device according to one of claims 22 to 24.

## Revendications

1. Procédé en vue de la commande au moins localisée de la climatisation dans un local (40), dans lequel dans une zone de filage (20) ouverte vis-à-vis du local (40) est effectué un processus de filage, dans la zone de filage (20) des pièces moulées en continu (11) contenant de l'eau, de la cellulose et un aminoxyde tertiaire sont extrudées et les pièces moulées en continu extrudées sont soufflées avant l'immersion dans un bain coagulant (17) dans une fente d'air à l'aide d'un courant gazeux (16), et l'installation de filage est surveillée et peut être inspirée par un personnel de service se trouvant dans une zone de séjour (22,23,24) adjacente à la zone de filage, et l'air d'échappement (27) et/ou l'air d'amenée (32) dans le local (40) étant commandé en considération du courant gazeux (16), de sorte que dans la zone de filage (20) et/ou la zone de séjour (22,23,24) est établie une climatisation prédéterminée du local.

2. Procédé selon la revendication 1, dans lequel dans la zone de filage (20) et/ou la zone de séjour (22,23,24) une teneur prédéterminée en amines et/ou produits de décomposition d'aminoxyde tertiaire est déterminée dans l'air du local.

3. Procédé selon la revendication 1 ou 2, dans lequel dans la zone de filage (20) et/ou la zone de séjour (22,23,24) une teneur prédéterminée en produits de décomposition du processus de filage est établie dans l'air du local.

4. Procédé selon l'une des revendications précédentes, dans lequel dans la zone de filage (20) et/ou la zone de séjour (22,23,24) est établie une humidité prédéterminée de l'air du local.

5. Procédé selon l'une des revendications précédentes, dans lequel dans la zone de filage (20) et/ou la zone de séjour (22,23,24) est établie une température prédéterminée de l'air du local.

6. Procédé selon l'une des revendications précédentes, dans lequel la climatisation du local est réglée par une commande du courant en volume (39) de l'air d'échappement (27).

7. Procédé selon l'une des revendications précédentes, dans lequel la climatisation du local est réglée par une commande du courant en volume (39) de l'air d'amenée (32).

8. Procédé selon l'une des revendications précédentes, dans lequel l'air d'échappement (27) est aspiré au moins partiellement directement hors de la zone de filage (20).

9. Procédé selon l'une des revendications précédentes, dans lequel l'air d'échappement (27) est aspiré au moins partiellement directement hors de la zone de séjour (22,23,24).

10. Procédé selon l'une des revendications précédentes, dans lequel l'air d'échappement (27) est aspiré au moins partiellement hors d'une zone du local (40) proche du plafond.

11. Procédé selon l'une des revendications précédentes, dans lequel dans la zone de filage ou à proximité de la zone de filage entre 10 et 80 m³, de préférence entre 10 et 30 m³+ d'air d'échappement, contenant surtout de l'air de processus, est aspiré pour la quantité produite par kilo de pièces moulées en continu.

12. Procédé selon l'une des revendications précédentes, dans lequel entre 3 et 50 m³ de gaz par kilo de pièces moulées en continu produites sont soufflés dans la fente d'air par le dispositif de soufflage.

13. Procédé selon l'une des revendications précédentes, dans lequel entre 1,2 et 2,5 fois d'air d'échappement est aspiré hors du local, est amené par le gaz dans le local.

14. Procédé selon l'une des revendications précédentes, dans lequel 3 à 10 fois le volume du local est renouvelé par heure.

15. Procédé selon l'une des revendications précédentes, dans lequel l'air d'échappement (27) d'un étage de nettoyage est amené à un système de lavage (46), dans lequel la partie des proportions de l'air d'échappement provenant du processus de filage est réduite.

16. Procédé selon l'une des revendications précédentes, dans lequel dans l'étage de nettoyage est effectué un nettoyage essentiellement biologique par décomposition microbienne de produits de réaction du processus de filage.

17. Procédé selon la revendication 15 ou 16, dans lequel l'air d'échappement (27) est amené à un séparateur de gouttes (48).

18. Procédé selon l'une des revendications 15 à 17, dans lequel l'air d'échappement (27) est amené à un séparateur à aérosol (55).

19. Procédé selon l'une des revendications précédentes, dans lequel l'air d'échappement (27) est délivré à un filtre électrique avec lavage amont et/ou aval.

20. Procédé selon l'une des revendications précédentes, dans lequel au moins une partie de l'air d'amenée est guidé à proximité immédiate de la zone de filage (20).

21. Procédé selon l'une des revendications précédentes, dans lequel au moins une partie de l'air d'amenée (32) est guidé dans la zone de séjour (22,23,24).

22. Dispositif (25) de commande de la climatisation dans un local (40) avec une zone de filage (20) associée à une installation de filage (14), la zone de filage (20) présentant une fente d'air (12) limitée par un bain coagulant (17), ouverte vis-à-vis du local (40), à travers laquelle est amenée la pièce moulée en continu (11) extrudée d'une masse de filage contenant de l'eau, de la cellulose et un aminoxyde tertiaire et dans lequel est disposé un dispositif de soufflage (15), par lequel les pièces moulées en continu (11) peuvent être soufflées par un courant gazeux (16), et à une zone séjour (22,23,24) en vue de l'entretien et de l'inspection de l'installation de filage (14) par le personnel de service (21), le dispositif (25) présentant un dispositif d'air d'échappement (26) et un dispositif d'air d'amenée (31) ainsi qu'un dispositif de régulation (36), une climatisation prédéterminée du local étant réglable par le dispositif de régulation dans la zone de filage (20) et/ou la zone de séjour (22,23,24).

23. Dispositif selon la revendication 22, dans lequel dans la zone de filage est un capteur de l'air du local, par lequel un signal représentatif de la contamination de l'air du local par le processus de filage peut être délivré.

24. Dispositif selon la revendication 22 ou 23, dans lequel dans la zone d'entretien est disposé un capteur de l'air du local, par lequel un signal représentatif de la contamination de l'air du local par le processus de filage peut être délivré.

25. Post-équipement pour une installation de filage de fabrication de pièces moulées en continu à partir d'une masse de filage contenant de la cellulose, de l'eau et un aminoxyde tertiaire, l'installation de filage comprenant une tête d'extrusion (6) avec des ouvertures d'extrusion, une fente d'air (12) avec un dispositif de soufflage (15) et un bain coagulant (17), et dans lequel le dispositif selon l'une des revendications 22 à 24 pouvant être installé après coup dans une installation de filage existante.

26. Dispositif pour une installation de filage de fabrication de pièces moulées en continu à partir d'une masse de filage contenant de la cellulose, de l'eau et un aminoxyde tertiaire, l'installation de filage comprenant une tête d'extrusion (6) avec des ouvertures d'extrusion, une fente d'air (12) avec un dispositif de soufflage (15) et un bain coagulant (17) ainsi qu'un dispositif selon l'une des revendications 22 à 24.
